# EUROPEAN PATENT SPECIFICATION

(11) **EP 1 454 804 B1**
(45) Date of publication and mention of the grant of the patent: **13.02.2008**
(21) Application number: 02788799.1
(22) Date of filing: 11.12.2002
(51) Int. Cl.: B60R 21/26

(54) **BURST PLATE FOR INFLATOR**
BERSTPLATTE FÜR AUFBLASVORRICHTUNG
PLAQUE DE DECLENCHEMENT POUR DISPOSITIF DE GONFLAGE

(30) Priority: 14.12.2001 JP 2001381051
(43) Date of publication of application: 08.09.2004
(73) Proprietor: Daicel Chemical Industries, Ltd., Kita-ku, Osaka-shi Osaka 530-0001 (JP)
(72) Inventor: IWAI, Yasunori, Shijyonawate-shi, Osaka 575-0051 (JP); GOTO, Yuzo, Himeji-shi, Hyogo 671-1241 (JP); NAKAYASU, Masayuki, Himeji-shi, Hyogo 672-8079 (JP)
(74) Representative: Grünecker, Kinkeldey, Stockmair & Schwanhäusser Anwaltssozietät
(86) International application number: PCT/JP2002/012975
(87) International publication number: WO 2003/051684

(56) References cited:
- EP-A- 0 812 740
- EP-A- 1 075 988
- EP-A1- 0 687 597
- EP-A2- 1 075 988
- WO-A1-99/08983
- JP-A- 8 301 043
- JP-A- 11 189 122
- JP-B1- 47 036 288
- US-A- 4 146 047
- US-A- 5 348 344
- US-A- 5 632 505
- US-A- 6 131 948

## Description

The present invention relates to an inflator comprising a rupturable plate according to the preamble of claim 1, which is mounted in various kinds of vehicles to protect a passenger mainly when a vehicle receives the impact from the lateral direction of the vehicle and an air bag apparatus.

An inflator of the above type is known from EP 1 075 988 A2. Related types of inflators are known from US 5,632,505, US 6,131,948 and US 4,146,047.

As an inflator for an inflating type safety system of an automobile, in order to optimally protect a passenger in accordance with a position of a seat in a vehicle such as a driver side, a front passenger side next to the driver and the like, there are known various kinds of inflators utilizing a pressurized gas such as an air bag inflator for a driver side, an air bag inflator for a passenger side next to the driver, an air bag inflator for a side collision, an inflator, an inflator for a knee-bolster air bag, an inflator for an inflatable seat belt, an inflator for a tubular system and an inflator for a pretensioner and the like.

In these inflators, outflow of a pressurized gas is started by breaking a rupturable plate, and an air bag is finally inflated and developed. However, since the rupturable plate is broken only by an igniter, without using a so-called enhancer agent (transfer charge), it becomes important to increase destructibility of the rupturable plate, that is, to make the rupturable plate broken easily in view of increasing reliability in operation of the inflator.
Further, when small pieces produced by the broken rupturable plate enter the air bag, the air bag may be dirty or damaged. Therefore, it is also important to prevent such a situation.

Incidentally, as related prior arts, a device for inflating a flexible container using both helium and hydrogen is disclosed in USP No. 5,527,066. A gas flow device for an air bag using a pressurized inert gas is disclosed in USP No. 5,782,486. An air bag apparatus for inflating an air bag by nitrogen or helium is disclosed in USP No. 3,680,886. A side-collision inflator housing for an air bag which uses both pressurized gas and a gas generating agent is disclosed in USP No. 5,803,493. A pressurized gas inflator which uses argon or nitrogen as a pressurized gas is disclosed in JP-U No. 3031246 publication.

As described above, in the conventional inflators, it is required to achieve both increasing in destructibility of a rupturable plate and preventing broken pieces thereof from flowing in an air bag. However, when destructibility of a rupturable plate is increased, broken pieces are too small to be arrested, therefore, it becomes difficult to arrest such small pieces, or a manufacturing cost is increased because of a complicated arresting means for arresting the broken pieces such as a filter or the like.

### Disclosure of the Invention

An object of the present invention is to solve both the problems about destructibility of a rupturable plate and about preventing broken pieces from flowing into an air bag, thereby providing an inflator with high reliability.

The present invention provides, as one means for solving the above-described problem, an inflator inflating an article to be treated with pressurized medium according to claims 1-15 and an airbag apparatus according to claim 16.

In the inflator of the present invention, since the rupturable plate is not broken into small pieces and it falls off in a size smaller than its original size, excluding the size of the fixed peripheral edge portion, a arresting means such as a filter is unnecessary. For this reason, a manufacturing process can be facilitated and the number of parts can be reduced, and thereby, a manufacturing cost can be reduced.

### Brief Description of the Drawings

Fig. 1 is a sectional view of an inflator in the longitudinal direction.
Fig. 2 is a partially enlarged view of the inflator shown in Fig. 1.

### Description of Reference Numerals

- 10: inflator
- 12: inflator housing
- 14: opening portion
- 17: rupturable plate remaining portion
- 19a: peripheral edge portion of the rupturable plate
- 20: diffuser portion
- 22: first gas discharging hole
- 26: igniter
- 40: gas discharging port
- 60: opening portion (second gas discharging hole)

### Preferred Embodiment of the Invention

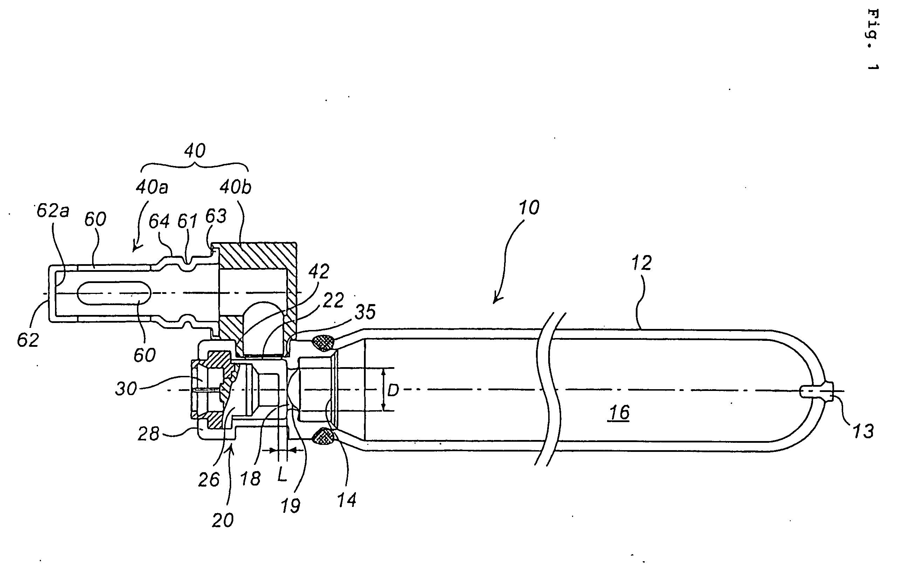

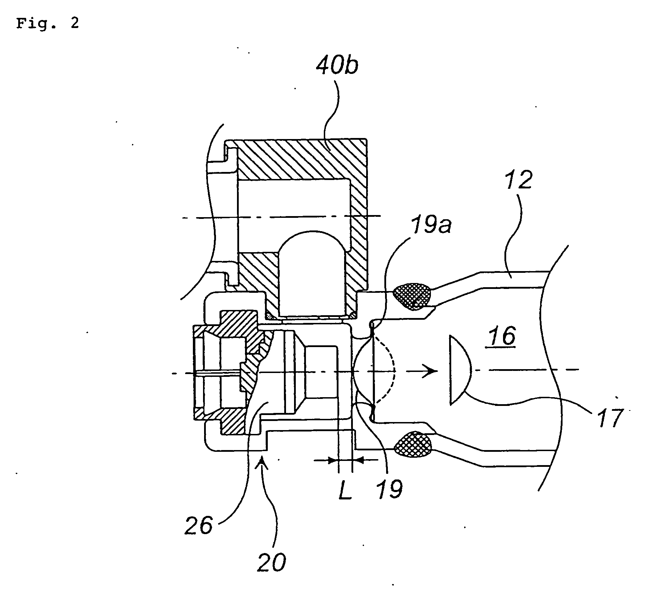

One embodiment of the present invention will be explained below with reference to the drawings. Fig. 1 is a sectional view of an inflator 10 in the longitudinal direction, and Fig. 2 is a view for explaining a broken state of a rupturable plate when an inflator 10 of the present invention is actuated, and it is a partially enlarged view of Fig. 1.

One end of an inflator housing 12 has an opening portion 14, and the other end thereof is closed. An inner space 16 is charged with a pressurized medium comprising an inert gas such as argon or helium or nitrogen gas at the maximum pressure of about 70,000 kPa. A cross section of the inflator housing 12 in the widthwise direction is circular in shape, and the opening portion 14 is also circular in shape.

The inflator housing 12 can be manufactured by swaging or spinning a pipe, or an existing gas cylinder can be directly utilized.

In case of swaging or spinning a pipe, one end thereof is almost closed, remaining a narrow hole used as a charging hole of a pressurized medium. After a diffuser portion 20 is connected to the inflator housing 12, the pressurized medium is charged through a gap at a sealing pin 13 inserted into the narrow hole. Thereafter, the inflator housing 12 is welded at the portion of the sealing pin 13 to be completely closed.

The diffuser portion 20 is connected to the opening portion 14 of the inf lator housing 12, and the diffuser portion 20 has a first gas discharge hole 22 for discharging the pressurized medium outside. Since the first gas discharging hole 22 is not closed, the interior of the diffuser portion 20 is maintained at normal pressure.

The inflator housing 12 and the diffuser portion 20 may be connected by welding as shown in Fig. 1, or a male screw portion provided on an end portion of an outer peripheral surface of the inflator housing 12 may screw in a female screw portion provided on an end portion of an inner peripheral surface of the diffuser portion 20 to connect the housing and the diffuser portion.

An outflow passage 18 for a pressurized medium between the opening portion 14 of the inflator housing 12 and the diffuser portion 20 is closed by a bowl-like shaped rupturable plate 19, and the inner space 16 of the inflator housing 12 is maintained at a high-pressure airtight state before actuation. The diameter (D) of the opening portion 14 (= the diameter of the outflow passage 18) is set to be larger than the diameter of the first gas discharging hole 22.

The rupturable plate 19 is like a disk before it is mounted to the inflator 10, and it is fixed to the diffuser portion 20 at a peripheral portion 19a by a resistance welding. The rupturable plate 19 is transformed into a bowl-like shape as illustrated by a pressing force due to a pressurized medium charged in the inner space 16 after being mounted. Incidentally, in Fig. 1, the rupturable plate 19 may be mounted to the opening portion 14 of the inflator 12.

In order to keep reliable operability of the rupturable plate 19 for a long term, it is preferable that the rupturable plate 19 has a breaking pressure of 1.5 times or more the charging pressure of the pressurized medium, and that it is further provided with one or at least two requirements selected from the following requirements (a) to (c):
(a) A ratio (diameter/thickness) of the diameter and the thickness is preferably 14 to 50, more preferably 20 to 45, and further preferably 30 to 45. Incidentally, the thickness and the diameter are not based upon the illustrated bowl-like shaped rupturable plate 19 but based upon the rupturable plate in a flat disk-like shape before installation thereof. And the diameter is a diameter (a diameter D of an outflow passage 18 for the pressurized medium) of a remaining portion 17 of a broken rupturable plate which is fallen off and it does not include the fixed peripheral edge portion 19a.
(b) A tensile strength is preferably 880 to 1100 N/mm², more preferably 900 to 1060 N/mm², and further preferably 950 to 1060 N/mm².
(c) An elongation is preferably not less than 25%, more preferably not less than 28%, and further preferably not less than 30%.

The requirements (a) to (c) can be provided in such combinations as (a) and (b), (a) and (c), (b) and (c), or (a), (b) and (c), but it is particularly preferable that the requirement (a) is provided. In order to exhibit the operational effect of the present invention, the case of providing only the requirement (a) or the case of providing a combination of the requirement (a) and the other requirements is desirable.

By providing the requirements (a) to (c), when an igniter 26 has been ignited, the rupturable plate 19 receives a pressing force due to the igniting and the whole plate 19, except for the fixed peripheral edge portion 19a (which is the rupturable plate remaining portion 17 shown in Fig. 2, having a diameter coinciding with the diameter D of the opening portion), can be easily fallen off as one piece, so that small broken pieces may be hardly generated. Further, it is preferable to provide the requirement (b) in addition to the requirement (a), because the rupturable plate remaining portion 17 is prevented from being further broken into smaller pieces by collision thereof in the inflator 10.

In order to exhibit the operational effect of the present invention, the rupturable plate 19 can have a fragile portion such as a continuous cut or a discontinuous cut (sewing-machine perforations) or a groove in a boundary between the fixed peripheral edge portion 19a and a non-fixed portion, in addition to the above-described requirements (a) to (c) or separately from the requirements (a) to (c).

The igniter 26 provided with a priming is provided, as a breaking means for the rupturable plate 19 at a position to face the rupturable plate 19 in the diffuser portion 20. A predetermined distance L is secured between the central portion (a projecting portion towards the igniter 26) of the rupturable plate 19 and a tip end of the igniter 26. The igniter 26 is mounted after the inflator housing 12 and the diffuser portion 20 are connected to each other. The igniter 26 is fitted in the direction from the opening portion at one end of the diffuser portion 20 towards the rupturable plate 19, and it is fixed by crimping a peripheral edge 28 of the opening portion at the one end of the diffuser portion 20 after being fitted. Reference numeral 30 denotes a connector.

It is preferable that the igniter 26 is provided with the following requirement (d), requirement (e), or the requirements (d) and (e) which relate to a coordination with the rupturable plate 19 and an output of the igniter.
(d) A distance (L) between the tip end of the igniter and the central portion of the rupturable plate is preferably 0.5 to 4 mm, more preferably 0.8 to 3 mm, and further preferably 1 to 3 mm.
(e) The output of the igniter is preferably not less than 5300 kPa (about 750 psi), and more preferably not less than 7100 kPa (about 1000 psi)
or more when the igniter is placed inside a sealed container (having an inner volume 10 ml) for which any changes due to heat or pressure changes do not occur substantially and the igniter is actuated at the temperature of 20°C.

Regarding the requirement (d) and/or (e), one or both thereof can be combined with the respective combinations of the above-described requirements (a) to (c).

By providing the requirements (d) and/or (e), when the igniter 26 is ignited, a proper pressing force due to the igniting can be applied to the rupturable plate 19. Therefore, the falling-off performance given by the provided requirements (a) to (c) is promoted.

In order to promote exhibition of the operational effects due to the requirements (d) and (e), it is preferable that the igniter 26 has zirconium potassium perchlorate (ZPP) in an amount of preferably not less than 190 mg and more preferably not less than 260 mg as a priming.

The diffuser portion 20 is connected with a gas discharging port 40, and these members are connected to each other by press-fitting an inflow portion 42 for a pressurized medium of a gas discharging port 40 into the first gas discharging hole 22 of the diffuser portion 20. At this time, the diameter of an inflow portion 42 of the gas discharging port 40 is set to be slightly smaller than the diameter of the first gas discharging hole 22 of the diffuser portion 20. A connection strength of a connection portion between the diffuser portion 20 and the gas discharging port 40 can be increased by winding a metallic band and the like on the connection portion from the outside to fasten the same thereon.

The gas discharging port 40 is mounted such that the center axis (shown in the dashed line in Fig. 1) of the inflator housing 12 and the center axis (shown in the dashed line in the longitudinal direction in Fig. 1) of the gas discharging port 40 are parallel to each other.

The gas discharging port 40 comprises a main body portion 40a having one end closed (a closed end surface 62), and the other end opened as well as a flange portion 63, and an adapter portion 40b. They are connected to each other by engaging the flange portion 63 of the main body portion 40a with the inside of the adapter portion 40b, or by crimping an end portion of the adapter 40b after-fitted, or alternatively, they may be connected by resistance-welding. Incidentally, in the gas discharging port 40, the main body portion 40a and the adapter portion 40b can be integrated with each other.

The adapter portion 40b and the diffuser portion 20 are connected to each other at a welding portion 35 by resistance-welding. At this time, after the adapter portion 40b (the inflow portion 42) and the diffuser portion 20 are resistance-welded to each other, the main body portion 40a may be connected, or after the main body portion 40a and the adapter portion 40b are connected to each other, the adapter portion 40b and the diffuser portion 20 may be resistance-welded to each other.

A plurality of opening portions (second gas discharging holes) 60 are provided on a side surface of the main body portion 40a, and, in a plurality of the opening holes 60, at least two holes are arranged symmetrically to each other regarding the widthwise direction or arranged approximately thereto. With respect to the opening portions 60, for example, six holes can be provided at equal intervals in the circumeferential direction. The diameter of the opening portion 60 can be made smaller than the diameter of the rupturable plate remaining portion 17.

A protrusion portion 64 and a groove portion (recessed portion) 61 provided continuously or with an interval (preferably, continuously) in the circumferential direction are provided near the adapter 40b of the main body portion 40a.

A top surface of the protrusion portion 64 is flat, a screw portion (a male screw portion or a female screw portion) can be provided on the flat surface as required, and the protrusion portion 64 is provided near the opening portions 60. The protrusion portion 64 is useful when the inflator 10 is connected to an air bag at the gas discharging port 40. The height of the protrusion portion 64 in the radial direction and a length thereof in the axial direction can be determined in view of connectability (connection strength, processing or the like) to the air bag.

In assembling an air bag apparatus, after an air bag is put on to cover the main body portion 40a, the air bag is fastened at the groove portion 61, so that the groove portion 61 serves to connect the both firmly to prevent the air bag from falling off. The radial depth of the groove portion 61 can be determined in view of connectability (connection strength, processing or the like) to the air bag.

Next, an operation when the inflator 10 of the present invention is applied to a curtain air bag will be explained with reference to Fig. 1 and Fig. 2.

When mounted to a vehicle, the inflator 10 is mounted as a system combining an activation signal-outputting means including an impact sensor and a control unit with a module case accommodating the above-described inflator 10 and a curtain air bag, and so on. The curtain air bag is connected to cover the second gas discharging holes 60 of the gas discharging port 40.

First, when the vehicle receives the impact, the igniter 26 is activated upon receiving a signal from the impact sensor of the system, and the priming is ignited and burnt. The rupturable plate 19 has a bowl-like shape projecting towards the igniter 26 before activation of the igniter 26 (the state indicated with a solid line in Fig. 1 and Fig. 2). However, it is estimated that, just after activation, the rupturable plate 19 receives a pressing force from the igniter 26 to change in a bowl-like shape projecting towards the opposite side, as shown with the broken line in Fig. 2, and thereafter the rupturable plate 17 excluding the peripheral edge portion 19a which is fixed to the diffuser portion 20 by resistance-welding (the diameter of the rupturable plate remaining portion 17 approximately coincide with the diameter D of the opening portion 14) falls off as shown in Fig. 2.

Since the opening portion 14 is opened by breaking the rupturable plate 19, the pressurized medium in the inner space 16 passes through the outflow passage 18 to be discharged out from the first gas discharging hole 22, and flows into the gas discharging port 40 via the inflow portion 42, and further flows out from the second gas discharging holes 60 to inflate the curtain air bag.

At this time, the diameter (D) (the diameter D of the opening portion 14) of the fallen rupturable plate remaining portion 17 is larger than the diameter of the first gas discharging hole 22, and therefore, the rupturable plate remaining portion 17 is never discharged outside the inflator 10, so that a filter for capturing broken pieces generated due to breaking the rupturable plate is not required or can be simplified. Even if the rupturable plate remaining portion 17 passes through the first gas discharging hole 22, the.rupturable plate remaining portion 17 is caught to stay in a pocket-like bottom portion 62a of the gas discharging port 40 by making the diameter of the opening 60 smaller than the diameter of the rupturable plate remaining portion 17. Accordingly, the rupturable plate remaining portion is never discharged out of the inflator 10.

Incidentally, in case of applying the inflator of the present invention to an inflator for side collision, the gas discharging port 40 is unnecessary and an air bag is connected to a portion of the first gas discharging hole 22 directly or via a suitable adapter.

### Examples

### Examples 1 to 3

The inflators shown in Fig. 1 and Fig. 2 were manufactured. Incidentally, as the rupturable plate, one provided with the following requirements and the like was used. As the rupturable plate, one comprising nickel-chrome alloy (containing 61 mass% of nickel and 21.5 mass% of chrome) was used.
Requirement (a): diameter/thickness -9 (mm)/0.275 (mm) - 32.7
Requirement (b): tensile strength - about 1000N/mm²
Requirement (c): elongation - 30% or more
Requirement (d): distance L between a tip end of an igniter and the central portion of a rupturable plate = 0.5 mm, 1.0 mm or 1.5 mm
Requirement (e) : output of an igniter - 7100 kPa (about 1000 psi).
Priming: ZPP 260 mg
Kind of a pressurized medium and a charging pressure: helium, 59 MPa

After these inflators were activated, the diffuser portions were removed and the states of the rupturable plates were examined. The rupturable plate remaining portions excluding the peripheral edge portions of the original rupturable plates were confirmed. All the diameters of the rupturable plates were 9 mm and approximately coincide with the diameters (D) of the opening portion.

### Examples 4 to 5

The inflators were obtained by setting the same requirements as those in Example 1 except that, in the requirement (a), it was set to be 40 and 43.6. After these inflators were activated, the diffuser portions were removed and the states of the rupturable plates were examined. The rupturable plates remaining portions excluding the peripheral edge portions of the original rupturable plates were confirmed. T' diameters of the rupturable plate remaining portions were 11 mm and 12 mm, and they approximately coincide with the diameters (D) of the opening portion.

## Claims

1. An inflator (10) for inflating an article to be inflated with a pressurized medium, comprising a rupturable plate (19) which blocks and closes between a portion (16) which is charged with a pressurized medium and maintained at high pressure and a portion (20) which is not charged with a pressurized medium and maintained at normal pressure; and an igniter (26) for rupturing the rupturable plate (19) provided in the portion which is not charged with a pressurized medium, wherein the rupturable plate includes a peripheral edge portion (19a) mounted to said inflator and a non-fixed portion, and closes an outflow passage (18) for the pressurized medium, the rupturable plate having a bowl-like shape projecting towards the igniter before activation of the igniter,
**characterized in that**
whole remaining portion (17) excluding the peripheral edge portion (19a) falls off as one piece when the rupturable plate (19) receives a rupturing pressure generated by the igniter by changing in a bowl-like shape projecting toward an opposite side to the igniter.

2. The inflator (10) according to claim 1, wherein the rupturable plate (19) is provided with at least one of the following requirements a) to b): a) a ratio diameter/thikness of a diameter and a thickness of the rupturable plate of is 14 to 50; b) a tensile strength of the rupturable plate is 880 to 1100 N/mm².

3. The inflator (10) according to any one of claims 1 or 2 comprising an inflator housing (12) charged with said pressurized medium and having an opening portion (14) at its one end, and a diffuser portion (20) fixed to said opening portion (14) of the inflator housing (12) and having a gas discharging hole (22) for discharging outside said pressurized medium flowing from said opening portion (14) in actuation, an outflow passage (18) for said pressurized medium between said opening portion (14) of said inflator housing (12) and the diffuser portion (20) is closed by said rupturable plate (19) fixed to the inflator housing (12) or the diffuser portion (20), and an igniter (26) serving as a rupturing means for the rupturable plate (19) is provided in the diffuser portion (20).

4. The inflator (10) according to claim 3, wherein a gas discharging port (40) serving as a discharging passage for the pressurized medium is connected to the gas discharging hole (22) of the diffuser portion (20).

5. The inflator (10) according to any one of claims 2 to 4, wherein the rupturable plate (19) has a rupturing pressure of 1,5 times or more the charging pressure of the pressurized medium.

6. The inflator (10) according to any one of claims 2 to 5, wherein a ratio diameter/thickness of the diameter and the thickness in the requirement a) is 20 to 45.

7. The inflator (10) according to any one of claims 2 to 6, wherein a tensile strength in the requirement b) is 900 to 1060 N/mm².

8. The inflator (10) according to any one of claims 1 to 7, wherein the rupturable plate (19) has a fragile portion in the boundary between the fixed peripheral edge portion (19a) and a non-fixed portion (17).

9. The inflator (10) according to claim 8, wherein the fragile portion is a continuous or discontinuous cut or groove.

10. The inflator (10) according to claim 3, wherein the rupturable plate (19) is provided with at least one of the following the requirements a) to b), and further provided with the following the requirements d) and/or e):
a) the ratio diameter/thickness of the diameter and the thickness of the rupturable plate (19) is 14 to 50;
b) the tensile strength is 880 to 1100 N/mm²; and
d) a distance (L) between a the tip end of the igniter (26) and the central portion of the rupturable plate (19) is 0.5 to 4 mm; and
e) an output of the igniter (26) is not less than 5300 kPa when the igniter (26) is put in a sealed container having the inner volume of 10 ml in which container heat and pressure do not change substantially and the igniter is actuated at the temperature of 20°C.

11. The inflator (10) according to claim 10, wherein a diameter of the gas discharging hole (22) is smaller than a diameter of the outflow passage (18) for the pressurized medium, which is closed by the rupturable plate (19).

12. The inflator (10) according to any one of claims 10 or 11, wherein a distance (L) between the tip end of the igniter (26) and the central portion of the rupturable plate in the requirement d) is 0.8 to 3 mm.

13. The inflator (10) according to any one of claims 10 to 12, wherein an output of the igniter (26) in the requirement e) is 7100 kPa or more.

14. The inflator (10) according to any one of claims 10 to 13, wherein the igniter (26) has zirconium-potassium perchlorate as a priming in an amount of 190 mg or more.

15. The inflator (10) according to any one of claims 10 to 13, wherein the igniter (26) has zirconium-potassium perchlorate as a priming in an amount of 260 mg or more.

16. An air bag apparatus comprising an activation signal-outputting means including an impact sensor and a control unit, and a module case accommodating the inflator (10) according to any one of claims 1 to 15 and an air bag.

## Patentansprüche

1. Eine Aufblasvorrichtung (10) zum Aufblasen eines aufzublasenden Gegenstands mit einem mit Druck beaufschlagten Medium, umfassend eine aufbrechbare Platte (19), welche zwischen einem Abschnitt (16), der mit einem mit Druck beaufschlagten Medium befüllt ist und auf einem hohen Druck gehalten wird, und einem Abschnitt (20), der nicht mit einem mit Druck beaufschlagten Medium befüllt ist und auf einem normalen Druck gehalten wird, blockiert und abschließt; und eine Zündvorrichtung (26) zum Aufbrechen der aufbrechbaren Platte, die in dem Abschnitt angeordnet ist, der nicht mit einem mit Druck beaufschlagtem Medium befüllt ist, wobei die aufbrechbare Platte einen umfangsseitigen Kantenabschnitt (19a) aufweist, der an der besagten Aufblasvorrichtung montiert ist, und einen nicht fixierten Abschnitt, und die einen Ausflussdurchgang (18) für das mit Druck beaufschlagte Medium verschließt, wobei die aufbrechbare Platte eine kugelartige Gestalt aufweist, die vor der Aktivierung der Zündvorrichtung in Richtung der Zündvorrichtung hervorsteht,
**dadurch gekennzeichnet, dass**
der gesamte verbleibende Abschnitt (17) mit der Ausnahme des umfangsseitigen Kantenabschnitts (19) als ein Teil abfällt, wenn die aufbrechbare Platte (19) einen von der Zündvorrichtung erzeugten, aufbrechenden Druck erfährt, in dem sie sich in eine kugelartige Gestalt verändert, die in Richtung einer zu der Zündvorrichtung gegenüberliegenden Seite hervorsteht.

2. Die Aufblasvorrichtung (10) im Einklang mit Anspruch 1, wobei die aufbrechbare Platte (19) zumindest eine der folgenden Anforderungen a) bis b) erfüllt:
a) ein Verhältnis Durchmesser / Dicke eines Durchmessers und einer Dicke der aufbrechbaren Platte ist 14 bis 50;
b) eine Zugfestigkeit der aufbrechbaren Platte ist 880 bis 1100 N/mm².

3. Die Aufblasvorrichtung (10) im Einklang mit einem der Ansprüche 1 oder 2, umfassend ein Gehäuse (12) der Aufblasvorrichtung, das mit dem besagten mit Druck beaufschlagten Medium befüllt ist und das einen Öffnungsabschnitt (14) an einem Ende davon aufweist, und einen Diffusorabschnitt (20), der an dem besagten Öffnungsabschnitt (14) des Gehäuses (12) der Aufblasvorrichtung fixiert ist und der eine Gasausflussöffnung (22) aufweist, um das besagte mit Druck beaufschlagte Medium, das bei der Betätigung von dem besagten Öffnungsabschnitt (14) ausfließt, nach außen abzulassen, wobei ein Ausflussdurchgang (18) für das besagte mit Druck beaufschlagte Medium zwischen dem besagten Öffnungsabschnitt (14) des Gehäuses (12) der Aufblasvorrichtung und dem besagten Diffusorabschnitt (20) durch die besagte aufbrechbare Platte (19), die an dem besagten Gehäuse (12) der Aufblasvorrichtung oder dem Diffusorabschnitt (20) fixiert ist, verschlossen ist, wobei eine Zündvorrichtung (26), die als ein Aufbrechmittel für die aufbrechbare Platte (19) dient, in dem besagten Diffusorabschnitt (20) angeordnet ist.

4. Die Aufblasvorrichtung (10) im Einklang mit Anspruch 3, wobei ein Gasauslasskanal (40), der als Auslassdurchgang für das mit Druck beaufschlagte Medium dient, an die Gasauslassöffnung (22) des Diffusorabschnitts (20) angeschlossen ist.

5. Die Aufblasvorrichtung (10) im Einklang mit einem der Ansprüche 2 bis 4, wobei die aufbrechbare Platte (19) einen Aufbrechdruck von dem 1,5 fachen oder mehr des Einfülldrucks des mit Druck beaufschlagten Mediums aufweist.

6. Die Aufblasvorrichtung (10) im Einklang mit einem der Ansprüche 2 bis 5, wobei ein Verhältnis Durchmesser / Dicke des Durchmessers und der Dicke in der Anforderung a) 20 bis 45 ist.

7. Die Aufblasvorrichtung (10) im Einklang mit einem der Ansprüche 2 bis 6, wobei eine Zugfestigkeit in der Anforderung b) 900 bis 1060 N/mm² ist.

8. Die Aufblasvorrichtung (10) im Einklang mit einem der Ansprüche 1 bis 7, wobei die aufbrechbare Platte (19) einen fragilen Abschnitt in der Grenze zwischen dem fixierten umfangsseitigen Kantenabschnitt (1 9a) und einem nicht fixierten Abschnitt (17) aufweist.

9. Die Aufblasvorrichtung (10) im Einklang mit Anspruch 8, wobei der fragile Abschnitt ein kontinuierlicher oder diskontinuierlicher Schnitt oder Nut ist.

10. Die Aufblasvorrichtung (10) im Einklang mit Anspruch 3, wobei die aufbrechbare Platte (19) zumindest eine der folgenden Anforderungen a) bis b) erfüllt und ferner die folgenden Anforderungen d) und/oder e) erfüllt:
a) das Verhältnis Durchmesser / Dicke des Durchmessers und der Dicke der aufbrechbaren Platte (19) ist 14 bis 50;
b) die Zugfestigkeit ist 880 bis 1100 N/mm²; und
d) eine Distanz (L) zwischen der endseitigen Spitze der Zündvorrichtung (26) und dem zentralen Abschnitt der aufbrechbaren Platte (19) ist 0,5 bis 4 mm; und
e) eine Ausgangsleistung der Zündvorrichtung (26) ist nicht geringer als 5300 kPa, wenn die Zündvorrichtung (26) in einem versiegelten Behälter mit dem inneren Volumen von 10 ml angeordnet ist, in welchem eine Hitze und ein Druck des Behälters sich im Wesentlichen nicht verändern und die Zündvorrichtung bei der Temperatur von 20 °C aktiviert wird.

11. Die Aufblasvorrichtung (10) im Einklang mit Anspruch 10, wobei ein Durchmesser der Gasauslassöffnung (22) kleiner ist als ein Durchmesser des Ausflussdurchgangs (18) für das mit Druck beaufschlagte Medium, welcher mit der aufbrechbaren Platte (19) verschlossen ist.

12. Die Aufblasvorrichtung (10) im Einklang mit einem der Ansprüche 10 oder 11, wobei eine Distanz (L) zwischen der endseitigen Spitze der Zündvorrichtung (26) und dem zentralen Abschnitt der aufbrechbaren Platte in der Anforderung d) 0,8 bis 3 mm ist.

13. Die Aufblasvorrichtung (10) im Einklang mit einem der Ansprüche 10 bis 12, wobei eine Ausgangsleistung der Zündvorrichtung (26) in der Anforderung e) 7100 kPa oder mehr ist.

14. Die Aufblasvorrichtung (10) im Einklang mit einem der Ansprüche 10 bis 13, wobei die Zündvorrichtung (26) Zirconium - Potassium - Perchlorat in einer Menge von 190 mg oder mehr als eine Initialzündung aufweist.

15. Die Aufblasvorrichtung (10) im Einklang mit einem der Ansprüche 10 bis 13, wobei die Zündvorrichtung (26) Zirconium - Potassium - Perchlorat in einer Menge von 260 mg oder mehr als eine Initialzündung aufweist.

16. Eine Aufblasvorrichtung, umfassend ein Aktivierungssignal - Ausgabemittel mit einem Aufprallsensor und einer Steuereinheit, und ein Modulgehäuse zur Unterbringung der Aufblasvorrichtung (10) im Einklang mit einem der Ansprüche 1 bis 15 und eines Airbags.

## Revendications

1. Gonfleur (10) destiné à gonfler un article qu'il s'agit de gonfler avec un milieu sous pression, comprenant une plaque susceptible de rupture (19), qui obture et ferme entre une partie (16) qui est chargée avec un milieu sous pression et maintenue à une haute pression, et une partie (20) qui n'est pas chargée avec un milieu sous pression et qui est maintenue à la pression normale, et un allumeur (26) destiné à rompre la plaque (19) susceptible de rupture, qui est prévu dans la partie qui n'est pas chargée avec un milieu sous pression, dans lequel la plaque susceptible de rupture comprend une partie de bord périphérique (19a) montée sur ledit gonfleur et une partie non fixée, et elle ferme un passage de sortie (18) pour le milieu sous pression, la plaque susceptible de rupture ayant une forme de bol qui fait saillie vers l'allumeur avant l'activation de l'allumeur,
**caractérisé en ce que**
toute la partie restante (17) à l'exclusion de la partie de bord périphérique (19a) tombe comme une seule pièce lorsque la plaque susceptible de rupture (19) subit une pression de rupture qui est engendrée par l'allumeur, en passant à une forme de bol qui fait saillie vers un côté à l'opposé de l'allumeur.

2. Gonfleur (10) selon la revendication 1, dans lequel la plaque susceptible de rupture (19) remplit au moins une des conditions suivantes a) à b):
a) un rapport diamètre/épaisseur entre un diamètre et une épaisseur de la plaque susceptible de rupture est de 14 à 50 ;
b) une résistence à la traction de la plaque susceptible de rupture est de 880 à 1100 N/mm².

3. Gonfleur (10) selon une quelconque des revendications 1 ou 2, comprenant un corps de gonfleur (12) chargé avec ledit milieu sous pression et ayant une partie formant ouverture (14) à une de ses extrémités et une partie formant diffuseur (20) fixée à ladite partie formant ouverture (14) du corps de gonfleur (12) et ayant un trou de décharge de gaz (22) pour expulser vers l'extérieur ledit milieu sous pression qui sort de ladite partie formant ouverture (14) dans l'actionnement, un passage d'écoulement (18) pour ledit milieu sous pression entre ladite partie formant ouverture (14) dudit boîtier de gonfleur (12) et la partie formant diffuseur (20) est fermé par ladite plaque susceptible de rupture (19) fixée au boîtier (12) du gonfleur ou à la partie formant diffuseur (20), et un allumeur (26) qui sert de moyen de rupture pour la plaque susceptible de rupture (19) est prévu sur la partie formant diffuseur (20).

4. Gonfleur (10) selon la revendication 3, dans lequel un orifice de décharge du gaz (40) servant de passage de décharge pour le milieu sous pression est relié au trou de décharge de gaz (22) de la partie formant diffuseur (20).

5. Gonfleur (10) selon une quelconque des revendications 2 à 4, dans lequel la plaque susceptible de rupture (19) a une pression de rupture de 1,5 fois ou plus la pression de charge du milieu sous pression.

6. Gonfleur (10) selon une quelconque des revendications 2 à 5, dans lequel un rapport diamètre/épaisseur entre le diamètre et l'épaisseur dans la condition a) est de 20 à 45.

7. Gonfleur (10) selon une quelconque des revendications 2 à 6, dans lequel une resistance à la traction dans la condition b) est de 900 à 1060 N/mm2.

8. Gonfleur (10) selon une quelconque des revendications 1 à 7, dans lequel la plaque susceptible de rupture (19) possède une partie fragile dans la limite entre la paritie de bord périphérique fixée (19a) et une partie non fixée (17).

9. Gonfleur (10) selon la revendication 8, dans lequel la partie fragile est une entaille ou rainure continue ou discontinue.

10. Gonfleur (10) selon la revendication 3, dans lequel la plaque susceptible de rupture (19) remplit au moins une des conditions a) à b), et remplit aussi les condtions d) et/ou e) :
a) le rapport diamètre/épaisseur entre le diamètre et l'épaisseur de la plaque susceptible de rupture (19) est de 14 à 50 ;
b) la résistance à la traction est de 880 à 1100 N/mm2 ; et
d) une distance (L) entre une extrémité de pointe de l'allumeur (26) et la partie centrale de la plaque susceptible de rupture (19) est de 0,5 à 4 mm ; et
e) une sortie de l'allumeur (26) n'est pas inférieure à 5300 kPa, lorsque l'allumeur (26) est placé dans un récipient fermé ayant un volume intérieur de 10 ml, récipient dans lequel la chaleur et la pression ne varient pas notablement et l'allumeur (26) est actionné à la température de 20°C.

11. Gonfleur (10) selon la revendication 10, dans lequel un diamètre du trou de décharge de gaz (22) est plus petit qu'un diamètre du passage d'écoulement (18) pour le milieu sous pression qui est fermé par la plaque susceptible de rupture (19).

12. Gonfleur (10) selon une quelconque des revendications 10 ou 11, dans lequel une distance (L) entre l'extrémité de pointe de l'allumeur (26) et la partie centrale de la plaque susceptible de rupture dans la condition d) est de 0.8 à 3 mm.

13. Gonfleur (10) selon une quelconque des revendications 10 à 12, dans lequel une sortie de l'allumeur (26) dans la condition e) est de 7100 kPa ou plus.

14. Gonfleur (10) selon une quelconque des revendications 10 à 13, dans lequel l'allumeur (26) comprend du perchlorate de zirconium-potassium en tant qu'amorce, en une quantité de 190 mg ou plus.

15. Gonfleur (10) selon une quelconque des revendications 10 à 13, dans lequel l'allumeur (26) possède du perchlorate de zirconium-potassium en tant qu'amorce, en une quantité de 260 mg ou plus.

16. Dispositif de coussin gonflable de sécurité comprenant un moyen produisant un signal d'activation qui comprend un détecteur d'impact et une unitré de commande, une boîte module qui renferme le gonfleur (10) selon une quelconque des revendications 1 à 15 et un coussin gonflable de sécurité.
